# EUROPÄISCHE PATENTSCHRIFT

(11) **EP 0 938 259 B1**
(45) Veröffentlichungstag und Bekanntmachung des Hinweises auf die Patenterteilung: **19.02.2003**
(21) Anmeldenummer: 97950075.8
(22) Anmeldetag: 03.11.1997
(51) Int. Cl.: A01N 43/24, A01N 25/28

(54) **ENDOSULFAN-MIKROKAPSELDISPERSION**
ENDOSULFAN MICROCAPSULE DISPERSION
DISPERSION DE MICROCAPSULES D'ENDOSULFAN

(30) Priorität: 13.11.1996 DE 19646880
(43) Veröffentlichungstag der Anmeldung: 01.09.1999
(73) Patentinhaber: Bayer CropScience GmbH, 65929 Frankfurt/Main (DE)
(72) Erfinder: KRAUSE, Hans-Peter, D-65719 Hofheim (DE); MAIER, Thomas, D-65719 Hofheim (DE); BREMMER, Jan, Nicolaas, 65830 Kriftel (DE)
(86) Internationale Anmeldenummer: EP9706053
(87) Internationale Veröffentlichungsnummer: WO98020737

(56) Entgegenhaltungen:
- EP-A- 0 619 073
- WO-A-95/23506
- WO-A-96/09760

## Beschreibung

In zahlreichen Patentanmeldungen wurde bereits die Mikroverkapselung von pestiziden Wirkstoffen beschrieben. Solche Formulierungen können z.B. den verkapselten Wirkstoff verlangsamt freisetzen und man kann dadurch verschiedene unerwünschte Wirkstoffeigenschaften, wie Giftigkeit für den Anwender oder Auswaschbarkeit in das Grundwasser, günstig beeinflussen.

Beispielsweise ist aus EP-A-134 674 die Minderung der Hautgiftigkeit von Difonate bei Kaninchen, aus EP-A-183 999 die der Fischgiftigkeit von Permethrin, aus EP-A-368 576 die der Giftigkeit von Chlorpyrifos bei Karpfen, JP-A-6-256116 die der Hautgiftigkeit von Fenobucarb und aus WO-A-95/23506 die der Fischtoxizität und Fraßgiftigkeit bei Mäusen bekannt.

Von den verschiedenen Varianten von Mikrokapseln haben sich Kapseldispersionen besonders gut bewährt. Sie sind dadurch zu erhalten, daß man beispielsweise wasserunlösliche Wirkstoffe in wäßrigem Milieu mit einer Polymerhaut umhüllt, die entstandene Dispersion gegebenenfalls mit Dispergierhilfsmitteln stabilisiert und auf diese Weise direkt ein wasserverdünnbares Konzentrat erhält. Bei diesen Formulierungen ist wie bei allen mehrphasigen Formulierungen zu beachten, daß es beim Lagern nicht zu Verdickungen, Koagulationen oder Sedimentbildungen kommt; zumindest muß der Anwender diese qualitätsmindernden Veränderungen mit zumutbarem Aufwand wieder rückgängig machen können. Es liegt in der Natur der Sache, daß Wirkstoffe mit hoher Dichte deswegen am schwierigsten zu Mikrokapseldispersionen verarbeitet werden können. Anforderungen an die physikalische Stabilität müssen durch geeignete Zusammensetzung der wäßrigen Trägerphase erfüllt werden.

Aus EP-A-619073 ist es bekannt, bei Mikrokapseldispersionen ein Suspendierungssystem für die wässrige Phase, die aus solubilisiertem Kaliumpolyphosphat salt besteht, zu benutzen.

Zwei weitere, wesentliche Anforderungen kommen aus entgegengesetzter Richtung auf die pestizidhaltige Kapsel zu. Einerseits muß durch ausreichend stabile Umhüllung sichergestellt sein, daß der angestrebte Zweck der Verkapselung erreicht wird, nämlich die Bindung des Wirkstoffs an das Kapselinnere. Dies bedeutet z.B. im Falle warmblütertoxischer Insektizide, daß der Wirkstoff erst dann aus seiner Versiegelung freigesetzt wird, nachdem der Anwender die Formulierung typischerweise verdünnt und ausgebracht hat, und der Spritzbelag auf der Zielfläche angetrocknet ist.

Andererseits darf die besagte Umhüllung keinesfalls so fest sein, daß der Wirkstoff nach der Anwendung zu langsam austritt. Die unterste Grenze der Freisetzungsgeschwindigkeit ist dabei durch viele Faktoren vorgegeben, z.B. physikochemische Gegebenheiten, biologische Wirkungsweise, Art des zu bekämpfenden Schadorganismus, Toleranz von Pflanzenschutzmittelrückständen in der behandelten Kultur.

Der insektizide Wirkstoff Endosulfan gehört aufgrund seiner Giftigkeit zu jenen, die gemäß Gefahrstoffverordnung entsprechend zu kennzeichnen sind. Endosulfan weist aber eine ganze Reihe von Vorzügen auf, so daß es sich dennoch in großem Ausmaß in verschiedenen Kulturen als Standardinsektizid etabliert hat.
So besteht seit langem schon Bedarf für eine Handelsform von Endosulfan in Form einer Mikrokapseldispersion, die den genannten Ansprüchen genügt.

Die gebräuchlichste Weise zum Aufbau der genannten Kapselwand um den zu umhüllenden Wirkstoff besteht in einer Grenzphasenpolymerisation an Öl-in-Wasser Emulsionen, wobei die organische Phase neben dem Wirkstoff ein öllösliches Präpolymer mit freien Isocyanatgruppen enthält.

In US-A-3 577 515 wird beschrieben, wie nach Zugabe von wasserlöslichen Polyaminen die Tropfenoberfläche in solchen Emulsionen infolge der Addition an die Isocyanatgruppen enthaltenden Präpolymere aushärtet. Dabei entsteht eine Polyharnstoff-Außenhülle.
Aus US-A-4 140 516 ist bekannt, daß man auch ohne externe wasserlösliche Amine Mikrokapseln mit einer Außenhaut vom Polyharnstofftyp erhalten kann, indem man in der Emulsion partielle Hydrolyse des Isocyanatfunktionen tragenden Präpolymers zuläßt. Dabei rekonstituiert sich ein Teil der Amino- aus den Isocyanatgruppen, und es kommt durch interne Polyaddition mit nachfolgender Aushärtung ebenfalls die gewünschte Kapselhülle zustande. Es wird die Verwendung von Toluylendiisocyanat, Hexamethylendiisocyanat, Methylendiphenyldiisocyanat und dessen höherer Homologe beschrieben. Falls mit einem externen Polyamin ausgehärtet werden soll, stammt dieses meist aus der Gruppe Ethylendiamin, Propylendiamin, Hexamethylendiamin, Diethylentriamin und Tetraethylenpentamin.

Formulierungen mit mikroverkapseltem Endosulfan wurden bereits verschiedentlich in der Patentliteratur beschrieben.

DE-A-2 757 017 betrifft innenstrukturierte Mikrokapseln, deren Wandmaterial die Natur eines gemischten Polymers hat, welches durch Harnstoff - und Urethan-Motive vernetzt ist. Im Inneren der Kapsel befindet sich der Wirkstoff gelöst in einem organischen Solvens. Typischerweise werden hier zum Aufbau der Kapselwand 10 % bezogen auf die Gesamtformulierung an Präpolymer benötigt. Es gibt keine Hinweise auf die Minderung der akut oralen Giftigkeit durch diesen Formulierungstyps.

Das gleiche Präpolymer wird auch in WO-A-96/09760 zur Verkapselung von Endosulfan eingesetzt. Es wird zwar gute insektizide Wirksamkeit beschrieben, jedoch kein Vorteil hinsichtlich unerwünschter Giftwirkung.

WO-A-95/23506 betrifft mit Endosulfan beladene Polyharnstoff-Mikrokapsel, in denen der Wirkstoff als erkaltete Schmelze vorliegt. Als Präpolymer wird ein Gemisch aus Methylendiphenyldiisocyanat und dessen höheren Homologen beschrieben; die Einsatzmenge an Präpolymer bezogen auf die Gesamtformulierung beträgt über 6%. Es wird mit einem Gemisch von Polyaminen ausgehärtet. Neben den Angaben zur stark herabgesetzten Giftigkeit dieses Formulierungstyps gibt es dort keine Anhaltspunkte über Vorteile in der biologischen Wirksamkeit und bezüglich Rückständen.

Nach wie vor bestand daher der Wunsch nach einer insektiziden Formulierung mit mikroverkapseltem Endosulfan, die folgende Bedingungen erfüllt:
- einfache, ungefährliche Herstellbarkeit
- gute Lagerstabilität
- verminderte Giftigkeit gegenüber dem Anwender und gegenüber Nutzorganismen
- gute biologische Anfangswirkung
- kein Risiko vermehrter Rückstände nicht freigesetzten Wirkstoffs auf den behandelten Pflanzenteilen.

Es wurde nun überraschenderweise gefunden, daß eine nach dem an sich bekannten Grenzflächenpolymerisationsverfahren hergestellte Mikrokapseldispersion mit bis zu 30 und mehr Gew.-% Endosulfan vorzugsweise ca. 300 bis 330 g Endosulfan/l den oben genannten Ansprüchen genügt, wenn zur Herstellung vergleichsweise geringere Mengen eines isocyanathaltigen Präpolymers (in der Größenordnung von ca. 1 Gew.-%) neben gegebenenfalls erforderlichem wasserlöslichen Diamin verwendet werden. Durch die sehr geringe Menge an kapselwandbildendem Präpolymer wird nämlich bewirkt, daß der Beginn der insektiziden Wirkung unter Praxisbedingungen sich nicht verzögert. Durch Zugabe einer genügend großen Menge an Calciumchlorid als wasserlösliches anorganisches Salz zur wäßrigen Phase und einer hiermit verbundenen Dichteerhöhung kann verhindert werden, daß die Mikrokapseln nach einer gewissen Zeit sedimentieren und sich gegebenenfalls ein schlecht redispergierbarer Bodensatz bildet.

Solche Mikrokapseldispersionen erlauben wegen ihrer günstigen akuten Giftigkeit gegen Warmblüter die toxikologische Einstufung "harmful", und zeigen überraschenderweise eine wesentlich geringere Fischgiftigkeit als solche Mikrokapseldispersionen, welche kein Calciumchlorid enthalten. Handelsübliche emulgierbare Konzentrate haben bekanntlich eine noch weitaus höhere Fischgiftigkeit.

Die Erfindung betrifft wäßrige Endosulfan-Mikrokapseldispersionen, in welchen die dispergierten Mikrokapseln Endosulfan, ein organisches Lösemittel oder Lösemittelgemisch und ein kapselbildendes Material auf Basis von Isocyanat-Präpolymeren enthalten und die wäßrige Phase, die das Dispersionsmittel darstellt, oberflächenaktive Stoffe und gegebenenfalls weitere Formulierungshilfsmittel enthält,
und welche, bezogen auf die gesamte Dispersion,
20 - 40 Gew.-% Endosulfan,
10 - 35 Gew.-% organisches Lösemittel oder Lösemittelgemisch,
kapselbildendes Material auf Basis von 0,5 - 5 Gew.-% Isocyanat-Präpolymeren,
0,2 - 5 Gew.-% eines oder mehrerer oberflächenaktiven Stoffe aus der Gruppe der Emulgatoren und Dispergatoren und Calciumchlorid als
ein wasserlösliches anorganisches Salz enthalten, wobei der Salzgehalt so gewählt wird, daß die Dichte der wäßrigen Phase zwischen 1,05 und 1,45 kg/l liegt.

In den erfindungsgemäßen Mikrokapseldispersionen können organische Lösemittel oder deren Gemische aus der Gruppe der N-Alkylfettsäureamide, N-Alkyllactame, Fettsäureester und aromatischen Kohlenwasserstoffe eingesetzt werden, wobei niederalkylsubstituierte Naphthalinderivate besonders geeignet sind.

Erfindungsgemäß geeignete, im Handel erhältliche Lösemittel sind beispielsweise ®Solvesso 200 (1), Butyldiglykolacetat, ®Shellsol RA (2), ®Acetrel 400 (3), ®Agsolex 8 (4), ®Agsolex 12 (5), ®Norpar 13 (6), ®Norpar 15 (7), ®Isopar V (8), ®Exsol D 100 (9), ®Shellsol K (10) und ®Shellsol R (11), welche sich wie folgt zusammensetzen:
(1) Gemische alkylierter Naphthaline, Siedebereich 219-282°C, Hersteller: Exxon.
(2) Gemische alkylierter Benzole, Siedebereich 183-312°C, Hersteller: Shell.
(3) Hochsiedendes Aromatengemisch, Siedebereich: 332-355°C, Hersteller: Exxon.
(4) N-Octylpyrrolidon, Siedepunkt (0,3 mm Hg) 100°C, Hersteller: GAF.
(5) N-Dodecylpyrrolidon, Siedepunkt (0,3 mm Hg) 145°C, Hersteller: GAF.
(6) Aliphatische Kohlenwasserstoffe, Siedebereich: 228-243°C, Hersteller: Exxon.
(7) Aliphatische Kohlenwasserstoffe, Siedebereich: 252-272°C, Hersteller: Exxon.
(8) Aliphatische Kohlenwasserstoffe, Siedebereich: 278-305°C, Hersteller: Exxon.
(9) Aliphatische Kohlenwasserstoffe, Siedebereich: 233-263°C, Hersteller: Exxon.
(10) Aliphatische Kohlenwasserstoffe, Siedebereich: 192-254°C, Hersteller: Shell.
(11) Aliphatische Kohlenwasserstoffe, Siedebereich: 203-267°C, Hersteller: Shell.

Auch Mischungen dieser Lösemittel untereinander sind geeignet. Insbesondere sind Butyldiglykolacetat, ®Acetrel 400, ®Agsolex 8 und ®Agsolex 12 gut verwendbar. ®Solvesso 200 ist besonders bevorzugt.

In diesem Solvent liegt der Wirkstoff Endosulfan gelöst vor, und zwar in solchen Mengen, daß die Wirkstoffkonzentration bezogen auf die Gesamtformulierung zwischen 20 und 40 Gew.-%, bevorzugt zwischen 20 und 35 Gew.-% beträgt. Besonders bevorzugt sind ungefähr 300 bis 330 g Endosulfan/l Gesamtformulierung.

Das kapselbildende Material, aus dem die Hüllen der Mikrokapseln aufgebaut sind, wird vorzugsweise ausgehend von öllöslichen, Isocyanatgruppen enthaltenden Präpolymeren erhalten, bei welchen es sich um eine Gruppe technischer Mischprodukte handelt, die jeweils aus Polyisocyanaten auf Basis von Kondensaten aus Anilin und Formaldehyd bestehen. Diese technischen Mischprodukte unterscheiden sich voneinander im Kondensationsgrad und gegebenenfalls in chemischen Modifikationen. Wichtige Kenngrößen sind für den Anwender Viskosität und Gehalt an freien Isocyanatgruppen. Typische Verkaufsprodukte sind hier ®Desmodur-Marken (Bayer AG) und ®Voranate-Marken (Dow Chemicals). Es ist für die Erfindung wesentlich, daß die Einsatzmenge an isocyanatgruppenhaltigem Präpolymer ≤ 5 Gew.-% bezogen auf die Gesamtformulierung ist; bevorzugt werden 0,5 - 5 Gew.-%, insbesondere 1 - 2 Gew.-%.

Das kapselbildende Material wird gebildet durch Aushärten des Isocyanat-Präpolymers entweder in Gegenwart von Wasser bei 0 - 95°C, vorzugsweise 20 - 65°C oder, vorzugsweise, mit der erforderlichen Menge eines Diamins.

Für den Fall, daß die Mikrokapseln unter Einbezug von Diaminen gebildet werden, kommen als solche beispielsweise Alkylendiamine, Dialkylentriamine und Trialkylentetramine in Frage, deren Kohlenstoffketten-Einheiten zwischen 2 und 8 Kohlenstoffatome enthalten. Bevorzugt wird Hexamethylendiamin. Dabei können entweder Mengen eingesetzt werden, die im stöchiometrischen Verhältnis zur verwendeten Menge an Isocyanat-Präpolymer stehen, oder vorzugsweise im bis zu dreifachen, insbesondere im bis zu zweifachen Überschuß.

In der wäßrigen Phase der erfindungsgemäßen Formulierungen sind oberflächenaktive Formulierungshilfstoffe aus der Gruppe der Emulgatoren und Dispergatoren enthalten. Sie stammen aus einer Gruppe, welche z.B. die Stoffamilien der Polyvinylalkohole, der Polyalkylenoxide, der Kondensationsprodukte von Formaldehyd mit Naphthalinsulfonsäuren und/oder Phenolen, der Polyacrylate, der Copolymere aus Maleinsäureanhydrid mit Alkylen-alkylether, der Ligninsulfonate, und der Polyvinylpyrrolidone umfaßt. Diese Stoffe werden zu 0,2 bis 5 Gew.-%, bevorzugt zu 0,5 bis 2 Gew.-%, jeweils bezogen auf die gesamte Dispersion eingesetzt.

Bei den Polyalkylenoxiden werden Blockcopolymere bevorzugt, deren Molekülzentrum von einem Polypropylenoxidblock, die Molekülperipherie dagegen von Polyethylenoxidblöcken gebildet wird. Besonders bevorzugt werden dabei Stoffe, bei welchen der Polypropylenblock eine Molmasse von 2000 - 3000 aufweist, und die Polyethylenoxidblöcke einen Anteil von 60 bis 80 % an der gesamten Molmasse ausmachen. Ein solcher Stoff wird z.B. von der Firma BASF Wyandotte unter der Bezeichnung ®Pluronic F87 vertrieben.

Weitere geeignete Dispergatoren sind Calcium-Ligninsulfonat, hochveredeltes Natrium-Ligninsulfonat (z.B. ®Vanisperse CB von Fa. Borregard), Dispergiermittel SI und Dispergiermittel SS von Fa. Hoechst AG,
Naphthalin-Sulfonsäure-Formaldehyd-Kondensationsprodukt-Natriumsalz (z.B. ®Morwet D 425 von DeSoto oder ®Tamol NN 8906 von Fa. BASF), Natriumpolycarboxylat (z.B. ®Sopropon T 36 von Fa. Rhône Poulenc).

Geeignete Polyvinylalkohole werden durch Teilverseifung von Poylvinylacetat hergestellt. Sie weisen einen Hydrolysegrad von 72 bis 99 Mol-% und eine Viskosität von 2 bis 18 cP (gemessen in 4%iger wäßriger Lösung bei 20°C, entspr. DIN 53 015) auf. Vorzugsweise verwendet man teilverseifte Polyvinylalkohole mit einem Hydrolysegrad von 83 bis 88 Mol-% und niedriger Viskosität, insbesondere von 3 bis 5 cP.

Die wäßrige Phase der erfindungsgemäßen Formulierungen enthält gegebenenfalls mindestens ein weiteres Formulierungshilfsmittel aus der Reihe der Netzmitel, der Frostschutzmittel, der Verdickungsmittel, der Konservierungsmittel und dichteerhöhenden Bestandteile.

Als Netzmittel kommen beispielsweise Vertreter aus den Stoffgruppen der alkylierten Naphthalinsulfonsäuren, der N-Fettacyl-N-alkyltauride, der Fettacylamidoalkylbetaine, der Alkylpolyglycoside, der alpha-Olefinsulfonate, der Alkylbenzolsulfonate, der Ester der Sulfobemsteinsäure, und der (ggf. durch Alkylenoxy-Gruppen modifizierten) Fettalkylsulfate in Frage. Der Anteil liegt hier zwischen 0 und 5 Gew.-%, bevorzugt zwischen 0 und 2 Gew.-%, bezogen auf die Gesamtformulierung.

Geeignete Handelsprodukte sind beispielsweise ®Darvan Nr. 3, ®Vanisperse CB, ®Luviskol K 30, Reserve C, ®Forlanit P, ®Sokalan CP 10, ®Maranil A, ®Genapol PF40, ®Genapol LRO, Tributylphenolpolyglykolether, wie die ®Sapogenat T-Marken (Hoechst), Nonylphenolpolyglykolether, wie die ®Arkopal N-Marken (Hoechst) oder Tristyrylphenolpolyglykolether-Derivate.

Als Konservierungsmittel können den wäßrigen Formulierungen folgende Mittel zugesetzt werden: Formaldehyd oder Hexahydrotriazinderivate wie z.B. ®Mergal KM 200 von Firma Riedel de Haen oder ®Cobate C von Firma Rhône Poulenc, Isothiazolinon-Derivate, wie z.B. ®Mergal K9N von Firma Riedel de Haen oder ®Kathon CG von Firma Rohm u. Haas, 1,2-Benzisothiazolin-2-one wie z.B. ®Nipacide BIT 20 von Fa. Nipa Laboratorien GmbH oder ®Mergal K10 von Firma Riedel de Haen oder 5-Brom-5-nitro-1,3-dioxan (®Bronidox L von Fa. Henkel). Der Anteil dieser Konservierungsmittel beträgt maximal 2 Gew.-% bezogen auf die Gesamtformulierung.

Geeignete Frostschutzmittel sind beispielsweise ein- oder mehrwertige Alkohole, Glykolether oder Harnstoff, insbesondere Calciumchlorid, Glycerin, Isopropanol, Propylenglykolmonomethylether, Di- oder Tripropylenglykolmonomethylether oder Cyclohexanol. Der Anteil dieser Frostschutzmittel beträgt maximal 20 Gew.-% bezogen auf die Gesamtformulierung.

Verdickungsmittel können anorganischer oder organischer Natur sein; sie können auch kombiniert werden. Geeignet sind z.B. solche auf Aluminiumsilikat-, Xanthan-, Methylcellulose-, Polysaccharid-, Erdalkalisilikat-, Gelatine- und Polyvinylalkohol-Basis, wie beispielsweise ®Bentone EW, ®Veegum, ®Rodopol 23 oder ®Kelzan S. Ihr Anteil beträgt 0 - 0,5 Gew.-% bezogen auf die Gesamtformulierung.

Als dichteerhöhender Bestandteil der wäßrigen Phase wird Calciumchlorid benutzt. Die Salzmenge richtet sich nach dem spezifischen Gewicht, welches die wäßrige Phase jeweils annehmen soll, nämlich Dichten zwischen 1,05 und 1,45 kg/l, vorzugsweise zwischen 1,10 und 1.40 kg/l und besonders bevorzugt 1,15 und 1,35 kg/l. Bevorzugt sind Mengen, durch deren Zusatz die Dichte der wäßrigen Phase der Dichte der organischen Phase angenähert wird.

Die Erfindung betrifft auch ein Verfahren zur Herstellung der erfindungsgemäßen Mikrokapseldispersionen, das dadurch gekennzeichnet ist, daß man zunächst eine grobe Voremulsion aus organischer und wäßriger Phase (ohne Diamin) herstellt, und diese anschließend Scherkräften aussetzt, indem man sie vorzugsweise über ein kontinuierlich arbeitendes Mischorgan gibt, beispielsweise einen statischen Mischer, eine Zahnkolloidmühle oder ähnliches. Durch diesen Schritt erst entsteht die zur späteren Mikrokapselbildung nötige Feinteiligkeit der emulgierten Öltröpfchen. Zum Schluß wird, gegebenenfalls nach Zugabe eines Diamins, durch Polyreaktion im gesamten Stoffvolumen ausgehärtet.

Das Verfahren kann im Technikums- und Produktionsmaßstab halbkontinuierlich durchgeführt werden.

Die nachfolgenden Beispiele dienen zur Erläuterung der Erfindung, ohne daß diese darauf beschränkt wäre.

### A. Formulierungsbeispiele

### Beispiel 1 - 5 (Technikumsversuche)

In einem 200 I Rührkessel mit Anker-Rührwerk stellte man jeweils eine Lösung aus 27 kg techn. Endosulfan und 23 kg ®Solvesso 200 her, und ließ in ein Vorratsgefäß ab.
Danach bereitete man im selben Rührkessel jeweils eine wäßrige Phase zu (Zusammensetzung für die einzelnen Beispiele siehe unten in Tabelle 1), indem man Wasser vorlegte und die jeweiligen Hilfstoffe unter Rühren eintrug.
Es wurde bis zur vollständigen Lösung langsam weitergerührt. Danach steigerte man die Rührgeschwindigkeit auf 70 Upm, und trug zügig die frisch bereitete Mischung der wie oben angegeben hergestellten organischen Phase mit 1 kg ®Voranate M220 ein.
Nach kurzem Weiterrühren stellte man das Rührwerk ab und ließ die entstandene gelbliche, grobe Emulsion über eine Zahn-Kolloidmühle in ein Vorratsgefäß ablaufen, wobei sich eine helle, feine Emulsion bildete, deren Tröpfchen je nach Einstellung der Zahn-Kolloidmühle einen Durchmesser von 2 - 15 µm besaßen. Diese feine Emulsion wurde in den Rührkessel zurückgegeben und das Rührwerk wieder bei 70 Upm in Gang gesetzt. Man gab 2,5 kg einer 40%igen wäßrigen Hexamethylenlösung und rührte bei 30 Upm noch 4 Stunden lang nach.

**Tabelle 1**

| | Beispiele (Mengenangaben jeweils in kg) | | |
|---|---|---|---|
| | 1,2 | 3,4 | 5 |
| ®Mowiol 3/83 | 2,00 | 2,00 | 1,00 |
| ®Pluronic F87 | 1,80 | 1,80 | 1,80 |
| ®Morwet D425 | 0,50 | | |
| ®Galoryl DT120 | | 0,50 | |
| ®Soprofor FL | | | 2,00 |
| ®Rhodopol 23 | 0,10 | 0,10 | 0,10 |
| ®Mergal K9N | 0,10 | 0,10 | 0,10 |
| ®Antimussol UP | 0,10 | 0,10 | 0,10 |
| CaCl2 wasserfrei | 12,20 | 11,00 | |
| Glycerin techn. | 4,00 | 4,00 | |
| Wasser | 25,70 | 26,90 | 41,40 |

Die in Dispersion erhaltenen Mikrokapseln haben einen durchschnittlichen Durchmesser, der neben der Rezepturzusammensetzung auch von der Umlaufgeschwindigkeit des Rotors in der Mühle und der Einstellung des Abstandes zwischen Rotor und Stator (des "Reibspaltes") abhängt. In Tabelle 2 ist dies näher erläutert. Die angegebenen Viskositätswerte wurden an einem Rotationsviskosimeter ermittelt.

**Tabelle 2**

| Beispiel | Umlaufgeschwindigkeit (Upm) | Reibspalt | Viskosität/mPas bei 144 s⁻¹ | Kapseldurchmesser (µm) |
|---|---|---|---|---|
| 1 | 3000 | 3 | 840 | 2,8 |
| 2 | 1500 | 3 | 1100 | 5,1 |
| 3 | 1500 | 1 | 500 | 9,0 |
| 4 | 1500 | 1 | 510 | 8,7 |
| 5 | 3000 | 3 | 140 | 2,5 |

### Beispiel 6

Es wurde wie in den Beispielen 1 - 5 eine Mikrokapseldispersion hergestellt, mit dem Unterschied, daß man keinen kontinuierlichen Misch-Schritt vorsah. Die wäßrige Phase setzte sich aus 2,1 kg ®Mowiol 3/83, 1,8 kg ®Pluronic F 87, 0,5 kg ®Morwet D425, 4 kg techn. Glycerin (86,5%ig) sowie jeweils 100g ®Rhodopol 23 und ®Mergal K9N in 36,8 kg Wasser zusammen. Diese wäßrige Phase wurde in einem Rührkessel mit Ankerrührer vorgelegt und die organische Phase aus 27 kg techn. Endosulfan, 24 kg Solvesso 200 sowie 1 kg Präpolymer ®Voranate M220 wurde über einen Faßkipper unter Rühren bei Raumtemperatur zugegossen. Nach 30 min Rühren gab man 2,5 kg einer 40%igen wäßrigen Hexamethylendiamin-Lösung zu und rührte noch 4h nach.
Auf diese Weise wurden Mikrokapseln mit einem durchschnittlichen Durchmesser von 14,9 µm erhalten.

### Beispiel 7

Es wurde wie in Beispiel 6 eine Mikrokapseldispersion hergestellt, mit dem Unterschied, daß man anstelle des Ankerrührers einen Propellerrührer einsetzte. Unter sonst gleichen Bedingungen erhielt man nun Mikrokapseln mit einem durchschnittlichen Kapseldurchmesser von 4,1 µm.

### Beispiel 8 (Vergleichsbeispiel)

Für diesen Mikroverkapselungsversuch wurde als Präpolymer ein Stoff verwendet, der durch Umsetzung von 8 Mol Toluylendiisocyanat mit Hexan-1,2,6-triol : Butan-1,3-diol : Polypropylenglykol 1000 im Molverhältnis 3:1:1 erhalten wurde und zur Weiterververwendung in einem 1:1-Gemisch von n-Butylacetat und Xylol aufgelöst wurde, in dem eine 50%ige Lösung des Präpolymeren vorlag (beschrieben in DE-A 2 757 017).
Es wurde wie in Beispiel 1 beschrieben eine Mikrokapseldispersion hergestellt, mit dem Unterschied, daß 36,4 Teile Wasser und 3 Teile der vorerwähnten Präpolymerlösung verwendet wurden, unter Verzicht auf Diamin zur Aushärtung. Dazu rührte man 15h bei Raumtemperatur nach.
Die Mikrokapseln der erhaltenen Dispersion wiesen einen mittleren Durchmesser von 17 µm auf, und die Viskosität auf dem Rotationsviskosimeter lag bei einer Schergeschwindigkeit von 144 s⁻¹ bei 350 mPas.

### Beispiele 9, 10 und 11

Es wurden im Labormaßstab mit den Rezepturen der Beispiele 1, 3 und 5 jeweils Mikrokapseldispersionen hergestellt, indem 46,5 Teile der vorbeschriebenen wäßrigen Phase vorgelegt und 51 Teile der kompletten organischen Phase unter Rühren bei 300 Upm in die wäßrige Phase eingetragen wurden. Danach stellte man das Rührwerk auf 2000 Upm und rührte zuerst 30 Sek. 2000 Upm.
Darauf reduzierte man die Drehzahl auf 300 Upm, gab 2,5 Teile einer 40 %igen wäßrigen Lösung von Hexamethylendiamin zu und rührte noch 1 Min. nach. Die Drehzahl wurde schließlich noch weiter auf 50 Upm verringert, und es wurde 4 h nachgerührt.
Die Ergebnisse sind in Tabelle 3 wiedergegeben.

**Tabelle 3**

| Beispiel | Rezeptur wie Beispiel | Viskosität/ mPas bei 144 s⁻¹ | Kapseldurchmesser (µm) |
|---|---|---|---|
| 9 | 1 | 870 | 8,1 |
| 10 | 3 | 560 | 7,8 |
| 11 | 5 | 150 | 8,4 |

### B. Biologische Beispiele

### Beispiel 12: Anfangs- und Dauerwirkung bei Aphis fabae

Bohnenpflanzen wurden jeweils tropfnaß mit einer wäßrigen Verdünnung der angegebenen Formulierung besprüht und sofort bzw. 3 Tage nach dem Trocknen mit Blattläusen infiziert.

Bonitierung: Mortalität (%) bei 7 Tage nach Infestation (siehe Tabelle 4)

**Tabelle 4**

| | | Infestation nach | |
|---|---|---|---|
| Formulierung | g Wirkstoff/hl | 0 Tagen | 3 Tagen |
| Endosulfan | 30 | 99 | 30 |
| EC35 (Handelsware) | 10 | 90 | 15 |
| | 3 | 0 | 0 |
| Formulierungbeispiel 10 | 30 | 100 | 95 |
| | 10 | 98 | 60 |
| | 3 | 93 | 0 |

### Beispiel 13: Anfangs- und Dauerwirkung bei Heliothis virescens

Baumwollpflanzen wurden jeweils entsprechend einer Aufwandmenge von 200 I Sprühflüssigkeit pro ha mit einer wäßrigen Verdünnung der angegebenen Formulierungen besprüht. Nach dem Trocknen wurde sofort bzw. nach 4 und 7 Tagen mit Larven des Baumwollkapselbohrers infiziert. (Ergebnis siehe Tabelle 5). (Bonitierung: Mortalität (%) 4 Tage nach Infestation)

**Tabelle 5**

| | | Infestation nach : | | |
|---|---|---|---|---|
| Formulierung | g/ha | 0 Tagen | 4 Tagen | 7 Tagen |
| Endosulfan | 300 | 100 | 100 | 50 |
| EC35 (Handelsware) | 100 | 100 | 70 | 20 |
| | 30 | 80 | 30 | 40 |
| | 10 | 10 | 0 | 10 |
| Formulierungsbeispiel 10 | 300 | 100 | 100 | 100 |
| | 100 | 90 | 100 | 100 |
| | 30 | 10 | 80 | 100 |
| | 10 | 20 | 30 | 90 |

Die Gewächshausversuche belegen, daß eine erfindungsgemäße Mikrokapselformulierung gegenüber einer handelsüblichen EC-Formulierung hinsichtlich Anfangs- und Dauerwirkung zumindest gleichwertig ist.

### C. Toxikologische Versuche

### Beispiel 14:

Mikrokapsel mit mittlerem Kapseldurchmesser von 14,9 µm, hergestellt wie in Beispiel 6 beschrieben:
LD₅₀-Wert bei weiblicher Ratte: 530 mg / kg Körpergewicht

### Beispiel 15:

Mikrokapsel mit mittlerem Kapseldurchmesser von 4,1 µm, hergestellt wie in Beispiel 7 beschrieben:
LD₅₀-Wert bei weiblicher Ratte: 315 mg / kg Körpergewicht

### Beispiel 16:

Mikrokapsel mit mittlerem Kapseldurchmesser von 7, 8µm, hergestellt wie in Beispiel 10 beschrieben:
LD₅₀-Wert bei weiblicher Ratte: größer als 200 mg / kg Körpergewicht

### Beispiel 17:

Mikrokapsel mit mittlerem Kapseldurchmesser von 17 µm, hergestellt wie in Beispiel 8 beschrieben:
LD₅₀-Wert bei weiblicher Ratte: 173 mg / kg Körpergewicht

Die toxologischen Versuche belegen die günstigere Oral-Toxizität der erfindungsgemäßen Formulierungen bei Warmblütern, über einen großen Durchmesserbereich hinweg.

### D. Fischgiftigkeit

Die Beispiele in Tabelle 6 zeigen, daß die Fischgiftigkeit erfindungsgemäßer, Calciumchlorid enthaltender Mikrokapselformulierung wesentlich unter der von Mikrokapseldispersionen ohne Calciumchlorid liegt.

**Tabelle 6**

| Fischgiftigkeit gegenüber Blauem Sonnenbarsch | | | | |
|---|---|---|---|---|
| Beispiel 18: | Mikrokapseldispersion ohne CaCl₂ (Formulierungsbeispiel 5) Mortalität nach | | | |
| Konzentration: | 24 h | 48 h | 72 h | 96 h |
| mg | Tiere / % | Tiere / % | Tiere / % | Tiere / % |
| Formulierung/l | | | | |
| **Kontrolle** | 0 / 0 | 0 / 0 | 0 / 0 | 0 / 0 |
| **0,032** | 0 / 0 | 0 / 0 | 0 / 0 | 0 / 0 |
| **0,1** | 3 / 100 | 3 / 100 | 3 / 100 | 3 / 100 |

| Beispiel 19 | erfindungsgemäße Mikrokapseldispersion (Formulierungsbeispiel 1) Mortalität nach | | | |
|---|---|---|---|---|
| Konzentration: | 24 h | 48 h | 72 h | 96 h |
| mg | Tiere / % | Tiere / % | Tiere / % | Tiere / % |
| Formulierung/l | | | | |
| **Kontrolle** | 0 / 0 | 0 / 0 | 0 / 0 | 0 / 0 |
| **0,032** | 0 / 0 | 0 / 0 | 0 / 0 | 0 / 0 |
| **0,1** | 0 / 0 | 0 / 0 | 0 / 0 | 0 / 0 |

| Beispiel 20 | erfindungsgemäße Mikrokapseldispersion (Formulierungsbeispiel 3) Mortalität nach | | | |
|---|---|---|---|---|
| Konzentration: | 24 h | 48 h | 72 h | 96 h |
| mg | Tiere / % | Tiere / % | Tiere / % | Tiere / % |
| Formulierung/l | | | | |
| **Kontrolle** | 0 / 0 | 0 / 0 | 0 / 0 | 0 / 0 |
| **0,032** | 0 / 0 | 0 / 0 | 0 / 0 | 0 / 0 |
| **0,1** | 0 / 0 | 0 / 0 | 0 / 0 | 0 / 0 |

## Patentansprüche

1. Wäßrige Endosulfan-Mikrokapseldispersion, in welcher die dispergierten Mikrokapseln Endosulfan, ein organisches Lösemittel oder Lösemittelgemisch und ein kapselbildendes Material auf Basis von Isocyanat-Präpolymeren enthalten und die wäßrige Phase, die das Dispersionsmittel darstellt, oberflächenaktive Stoffe und gegebenenfalls weitere Formulierungshilfsmittel enthält,
und welche, bezogen auf die gesamte Dispersion,
20 - 40 Gew.-% Endosulfan,
10 - 35 Gew.-% organisches Lösemittel oder Lösemittelgemisch,
kapselbildendes Material auf Basis von 0,5 - 5 Gew.-% Isocyanat-Präpolymeren,
0,2 - 5 Gew.-% eines oder mehrerer oberflächenaktiven Stoffe aus der Gruppe der Emulgatoren und Dispergatoren und Calciumchlorid als
ein wasserlösliches anorganisches Salz enthält, wobei der Salzgehalt so gewählt wird, daß die Dichte der wäßrigen Phase zwischen 1,05 und 1,45 kg/l liegt.

2. Mikrokapseldispersion gemäß Anspruch 1, in welcher Isocyanat- Präpolymer ein öllösliches technisches Mischprodukt aus Polyisocyanaten auf Basis von Kondensaten aus Anilin und Formaldehyd ist.

3. Mikrokapseldispersion gemäß Anspruch 1 oder 2, in welcher das kapselbildende Material durch Aushärten des Isocyanat-Präpolymers in Gegenwart von Wasser bei 0 - 95°C, vorzugsweise 20 - 65°C oder mit der erforderlichen Menge eines Diamins gebildet wurde.

4. Mikrokapseldispersion gemäß einem der Ansprüche 1 bis 3, welche, bezogen auf die gesamte Dispersion,
20 - 35 Gew.-% Endosulfan,
15 - 30 Gew.-% organisches Lösemittel oder Lösemittelgemisch,
kapselbildendes Material auf Basis von 1 - 2 Gew.-% Isocyanat-Präpolymeren, und
0, 5 - 2 Gew.-% eines oder mehrerer oberflächenaktiver Stoffe aus der Gruppe der Emulgatoren und Dispergatoren enthält.

5. Mikrokapseldispersion gemäß einem der Ansprüche 1 bis 4, in welcher das kapselbildende Material durch Aushärten des Isocyanat-Präpolymers mit der bis zu dreifachen stöchiometrischen Menge eines Diamins gebildet wurde.

6. Mikrokapseldispersion gemäß einem der Ansprüche 1 bis 5, deren wäßrige Phase eine Dichte von 1,05 bis 1,45 kg/l aufweist.

7. Mikrokapseldispersion gemäß einem der Ansprüche 1 bis 6, deren wäßrige Phase eine Dichte von 1,10 bis 1,40 kg/l aufweist.

8. Mikrokapseldispersion gemäß einem der Ansprüche 1 bis 7, deren wäßrige Phase eine Dichte von 1,15 bis 1,35 kg/l aufweist.

9. Verfahren zur Herstellung einer Mikrokapseldispersion gemäß einem der Ansprüche 1 bis 8, **dadurch gekennzeichnet, daß** man eine grobe Voremulsion aus organischer und wäßriger Phase herstellt, diese anschließend Scherkräften aussetzt und die so erhaltene feinteilige Emulsion gegebenenfalls nach Zugabe eines Diamins im gesamten Stoffvolumen aushärtet.

## Claims

1. An aqueous endosulfan microcapsule dispersion in which the dispersed microcapsules comprise endosulfan, an organic solvent or solvent mixture and a capsule-forming material based on isocyanate prepolymers and the aqueous phase which represents the dispersion medium comprises surfactants with or without other formulation aids,
and which microcapsule dispersion contains, based on the total dispersion,
20 - 40% by weight of endosulfan,
10 -35% by weight of organic solvent or solvent mixture,
capsule-forming material based on 0.5 - 5% by weight of isocyanate prepolymers,
0.2 - 5% by weight of one or more surfactants selected from the group consisting of emulsifiers and dispersants and calcium chloride as a water-soluble inorganic salt, the salt content being selected in such a manner that the density of the aqueous phase is between 1.05 and 1.45 kg/l.

2. A microcapsule dispersion as claimed in claim 1, wherein isocyanate prepolymer is an oil-soluble industrial mixed product of polyisocyanates based on condensates of aniline and formaldehyde.

3. A microcapsule dispersion as claimed in claim 1 or 2, wherein the capsule-forming material was formed by curing the isocyanate prepolymer in the presence of water at 0 - 95°C, preferably 20 - 65°C, or with the required amount of a diamine.

4. A microcapsule dispersion as claimed in one of claims 1 to 3, which, based on the total dispersion, contains20 - 35% by weight of endosulfan,
15 - 30% by weight of organic solvent or solvent mixture,
capsule-forming material based on 1 - 2% by weight of isocyanate prepolymers, and
0.5 - 2% by weight of one or more surfactants selected from the group consisting of emulsifiers and dispersants.

5. A microcapsule dispersion as claimed in one of claims 1 to 4, wherein the capsule-forming material was formed by curing the isocyanate prepolymer with up to three times the stoichiometric amount of a diamine.

6. A microcapsule dispersion as claimed in one of claims 1 to 5, the aqueous phase of which has a density of 1.05 to 1.45 kg/l.

7. A microcapsule dispersion as claimed in one of claims 1 to 6, the aqueous phase of which has a density of 1.10 to 1.40 kg/l.

8. A microcapsule dispersion as claimed in one of claims 1 to 7, the aqueous phase of which has a density of 1.15 to 1.35 kg/l.

9. A process for preparing a microcapsule dispersion as claimed in one of claims 1 to 8, which comprises preparing a coarse preemulsion of an organic and aqueous phase, then subjecting this to shear forces and, with or without addition of a diamine, curing the fine emulsion thus obtained in the entire volume of substance.

## Revendications

1. Dispersion aqueuse de microcapsules d'endosulfane, dans laquelle les microcapsules dispersées contiennent de l'endosulfane, un solvant organique ou un mélange de solvants et un matériau formant des capsules à base de prépolymères d'isocyanates, et la phase aqueuse, qui représente le milieu de dispersion, contient des agents tensioactifs et éventuellement d'autres auxiliaires de formulation,
et qui contient, par rapport à la totalité de la dispersion,
20-40 % en masse d'endosulfane,
10-35 % en masse d'un solvant organique ou d'un mélange de solvants,
un matériau formant des capsules à base de 0,5-5 % en masse de prépolymères d'isocyanates,
0,2-5 % en masse d'un ou plusieurs agents tensioactifs du groupe des émulsionnants et des dispersants,
et du chlorure de calcium comme sel inorganique soluble dans l'eau, la teneur en sel étant choisie de manière que la densité de la phase aqueuse soit comprise entre 1,05 et 1,45 kg/l.

2. Dispersion de microcapsules selon la revendication 1, dans laquelle le prépolymère d'isocyanate est un mélange technique soluble dans l'huile de polyisocyanates à base de produits de condensation d'aniline et de formaldéhyde.

3. Dispersion de microcapsules selon la revendication 1 ou 2, dans laquelle le matériau formant des capsules a été formé par durcissement du prépolymère d'isocyanate en présence d'eau à 0-95°C, de préférence 20-65°C, ou avec la quantité nécessaire d'une diamine.

4. Dispersion de microcapsules selon l'une des revendications 1 à 3, qui contient, par rapport à la totalité de la dispersion
20-35 % en masse d'endosulfane,
15-30 % en masse d'un solvant organique ou d'un mélange de solvants,
un matériau formant des capsules à base de 1-2 % en masse de prépolymères d'isocyanates, et
0,5-2 % en masse d'un ou plusieurs agents tensioactifs du groupe des émulsionnants et des dispersants.

5. Dispersion de microcapsules selon l'une des revendications 1 à 4, dans laquelle le matériau formant des capsules a été formé par durcissement du prépolymère d'isocyanate avec une quantité d'une diamine allant jusqu'à trois fois la quantité stoechiométrique.

6. Dispersion de microcapsules selon l'une des revendications 1 à 5, dont la phase aqueuse a une densité de 1,05 à 1,45 kg/l.

7. Dispersion de microcapsules selon l'une des revendications 1 à 6, dont la phase aqueuse a une densité de 1,10 à 1,40 kg/l.

8. Dispersion de microcapsules selon l'une des revendications 1 à 7, dont la phase aqueuse aune densité de 1,15 à 1,35 kg/l.

9. Procédé de préparation d'une dispersion de microcapsules selon l'une des revendications 1 à 8, **caractérisé en ce que** l'on prépare une émulsion grossière préalable constituée d'une phase organique et d'une phase aqueuse, on la soumet ensuite à des forces de cisaillement et on durcit l'émulsion finement divisée ainsi obtenue éventuellement après avoir ajouté une diamine dans la totalité du volume du produit.
